(19) **Europäisches Patentamt**

**European Patent Office**

**Office européen des brevets**

(11) **EP 1 537 711 B1**

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(51) Int Cl.:
**H04L 27/26** (2006.01) **H04L 27/38** (2006.01)

(21) Anmeldenummer: **03794795.9**

(22) Anmeldetag: **22.08.2003**

(86) Internationale Anmeldenummer:
**PCT/DE2003/002815**

(87) Internationale Veröffentlichungsnummer:
**WO 2004/025918 (25.03.2004 Gazette 2004/13)**

(54) **PRÄAMBEL ZUR SCHÄTZUNG UND ENTZERRUNG VON UNSYMMETRIEN ZWISCHEN INPHASE- UND QUADRATURZWEIG IN MEHRTRÄGER-ÜBERTRAGUNGSSYSTEMEN**

PREAMBLE FOR ESTIMATION AND EQUALISATION OF ASYMMETRIES BETWEEN IN PHASE AND QUADRATURE BRANCHES IN MULTI-CARRIER TRANSMISSION SYSTEMS

PREAMBULE POUR L'ESTIMATION ET LA CORRECTION D'ASYMETRIES ENTRE UNE BRANCHE EN PHASE ET UNE BRANCHE EN QUADRATURE DANS DES SYSTEMES DE TRANSMISSION A PORTEUSES MULTIPLES

(84) Benannte Vertragsstaaten:
**DE FR GB IT**

(30) Priorität: **09.09.2002 DE 10241676**

(43) Veröffentlichungstag der Anmeldung:
**08.06.2005 Patentblatt 2005/23**

(73) Patentinhaber: **Infineon Technologies AG**
**81669 München (DE)**

(72) Erfinder:
• **BRÖTJE, Lars**
**28832 Achim (DE)**
• **KAMMEYER, Karl-Dirk**
**21244 Buchholz (DE)**
• **KÜHN, Volker**
**28357 Bremen (DE)**
• **VOGELER, Sven**
**27243 Gross Ippener (DE)**

(74) Vertreter: **Patentanwälte Lambsdorff & Lange**
**Dingolfinger Strasse 6**
**81673 München (DE)**

(56) Entgegenhaltungen:
**WO-A-02/056523**

• **SCHUCHERT A ET AL: "A novel IQ imbalance compensation scheme for the reception of OFDM signals" IEEE TRANSACTIONS ON CONSUMER ELECTRONICS, IEEE INC. NEW YORK, US, Bd. 47, Nr. 3, August 2001 (2001-08), Seiten 313-318, XP002217600 ISSN: 0098-3063**

**Beschreibung**

Die vorliegende Erfindung betrifft ein Verfahren zur Schätzung der durch IQ-Unsymmetrien hervorgerufenen Verzerrung von Funksignalen, welche in einem Mehrträger-Übertragungsverfahren in Datenblöcken übertragen werden, und ein Verfahren zur Entzerrung des durch IQ-Unsymmetrien hervorgerufenen Fehlers.

Innerhalb des europäischen DVB-(Digital Video Broadcasting-) Systems sind digitale Übertragungssysteme für Satellit (DVB-S), für Kabel (DVB-C) und für terrestrische digitale Rundfunkübertragung (DVB-T) entwickelt und entsprechende Spezifikationen hierfür erarbeitet worden. Aufgrund der auf dem terrestrischen Funkkanal vorhandenen problematischen Übertragungsverhältnisse wurde in der DVB-T-Spezifikation als Übertragungsverfahren das OFDM-Übertragungsverfahren (orthogonal frequency division multiplexing) festgeschrieben, mit welchem den schwierigen Übertragungsverhältnissen wirksam begegnet werden kann.

Ein weiteres wichtiges Anwendungsgebiet des OFDM-Übertragungsverfahrens bilden hochratige drahtlose Datenübertragungsnetze wie beispielsweise WLAN (Wireless Local Area Network), insbesondere die in den Standards IEEE802.11a und 11g sowie HIPERLAN/2 festgelegten Übertragungsverfahren.

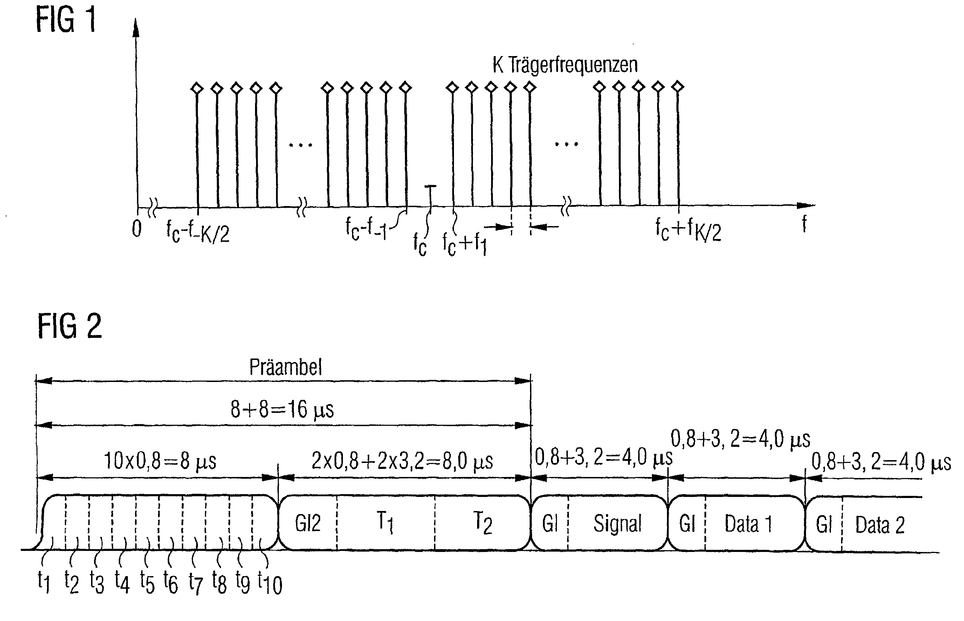

Das OFDM-Übertragungsverfahren ist ein Mehrträger-Übertragungsverfahren, bei welchem der Datenstrom auf eine Anzahl paralleler (orthogonaler) Unterträger aufgeteilt wird, welche jeweils mit einer entsprechend niedrigen Datenrate moduliert werden. Wie in der Fig. 1 dargestellt ist, sind auf der Frequenzakala innerhalb einer Übertragungsbandbreite K (Unter-)
Trägerfrequenzen in äquidistantem Abstand voneinander angeordnet. Die Trägerfrequenzen liegen beidseits und symmetrisch zu einer Mittenfrequenz $f_c$. Im Zeitbereich ergibt sich ein OFDM-Symbol_aus der Überlagerung aller K Trägerfrequenzen. Die Datehübertragun erfolgt in Form von Rahmen oder Bursts, wobei ein Rahmen eine gleichbleibende Anzahl von OFDM-Symbolen enthält.

Der Empfang und die Demodulation von OFDM-Funksignalen kann durch konventionelle Empfangskohzepte erfolgen, welche auf dem Prinzip des Überlagerungsempfangs mit nachfolgender digitaler Quadraturmischung beruhen. Vornehmlich aus Gründen der geringeren Leistungsaufnahme und der Vermeidung Chip externer Filter zur Spiegelfrequenz-Uriterdrückung werden jedoch zunehmend fortschrittlichere Empfangskonzepte bevorzugt, bei denen direktmischende Verfahren gewandt werden. Bei direktmischenden Empfängerkonzepten wird das über eine Antenne empfangene und verstärkte Funksignal in einen Inphas- (I-) und einen Quadrattur- (Q-) Zweig aufgespalten und in beiden Zweigen mit der Ausgangsfrequenz eines Lokaloszillators gemischt, wobei die den Mischern zugeführten Oszillatorfrequenzen durch einen Phasenschieber gegenseitig um 90˚ verschoben werden. Somit wird die Quadraturdemodulation zur Rückgewinnung der informationstragenden Basisbandsignale in diesem Empfangskonzept in analoger Schalturigstechnik ausgeführt.

Aufgrund von technologiebedingten Ungenauigkeiten im Herstellungsprozess und Nichtidealitäten der analogen Mischer und Oszillatoren sowie Abweichungen zwischen den Filtern im I- und Q-Zweig kommt es zu sogenannten IQ-Unsymmetrien oder IQ-Verzerrungen, d.h. Amplituden- und Phasenunsymmetrien zwischen den Quadraturkomponenten. Real- und Imaginärteil des komplexen Basisbandsignals sind, nicht um exakt 90˚ gegeneinander phasenverschoben und des Weiteren treten Amplitudenabweichungen zwischen I- und Q-Zweig auf. Dererlei IQ-Unsymmetrien können sowohl im Sender als auch im Empfänger auftreten. Im Empfänger führen die IQ-Unsymmetrien im Falle von OFDM-basierten Übertragungssystemen im Frequenzbereich, also nach der FFT-Transformation (fast fourier transform) im Empfänger zü einer gegenseitigen Interferenz zwischen jeweils zwei Datensymbolen auf den Unterträgern, deren Frequenzen symmetrisch zur Mittenfrequenz $f_c$ des OFDM-Spektrums angeordnet sind (im Folgenden durch die Unterträgerindizes n und -n angedeutet). Jedes auf dem Ünterträger n übertragene Datensymbol erzeugt durch die im Zeitbereich zugefügte IQ-Unsymmetrie eine Signalbeitrag auf dem Unterträger mit dem Index -n (Spiegelfrequenz). Die Überlagerung führt zu Verzerrungen der Nutzsignale an den Positionen n und -n.

In der Dissertation "Verfahren der digitalen Kompensation von Unsymmetrien der analogen Quadraturmischung in OFDM-Empängern" von Andreas Schuchert, angenommen vom Fachbereich Elektrotechnik und Informationstechnik der Bergischen Universität-Gesamthochschule Wuppertal, wurde im Kapital 4 eine mathematische Beschreibung der IQ-Unsymmetrien gegeben und eine quantitative Abschätzung des an der Spiegelfrequenz eines gewünschten Signals auftretenden Störbeitrags geliefert. Im Kapitel 6 der genannten Dissertation werden zwei verschiedene Verfahren zur IQ-Fehlerkompensation durch Frequenzbereichs-Entzerrung vorgeschlagen. Das erste darin vorgeschlagene Verfahren ermöglicht eine separate frequenzabhängige Kompensation von IQ-Unsymmetrien. Für die Detektion der Entzerrungsparameter durch einen IQ-Fehlerdetektor wird auch vorgeschlagen, die zur Schätzung der Kanalübertragungsfunktion gesendeten Pilotträger als Trainingssymbole zur Schätzung der IQ-Verzerrungen zu nutzen. Die für die Fehlerkompensation vorgesehenen Schaltungsanordnungen beider dargestellter Verfahren weisen jedoch eine relativ große Zahl an Funktionsblöcken auf und sind somit durch einen honen Implementierungsaufwand gekennzeichnet.

Aus der WO 02/056523 ist ein weiteres Verfahren bekannt, mit welchem sender- und empfängerseitige IQ-Unsymmetrien beseitigt werden können. Dieses Verfahren beruht darauf, dass den IQ-Fehlern entsprechende Ausgleichssignale erzeugt und für die Kompensation verwendet werden.

Es ist somit Aufgabe der vorliegenden Erfindung, ein Verfahren zur Schätzung und anschließenden Entzerrung der durch IQ-Unsymmetrien hervorgerufenen Verzerrung von Funksignalen in Mehrträger-Übertragungssystemen, insbesondere OFDM-Übertragungssystemen anzugeben, welches mit geringerem Aufwand implementiert werden kann.

Diese Aufgabe wird durch die Merkmale des unabhängigen Patentanspruchs 1 gelöst. Vorteilhafte Weiterbildungen und Ausgestaltungen sind in den Unteransprüchen angegeben.

Die vorliegende Erfindung bezieht sich auf ein Verfahren zur Schätzung der durch IQ-Unsymmetrien hervorgerufenen Verzerrung von Funksignalen, welche in einem Mehrträger-Übertragungsverfahren in Form von Datenblöcken (auch als Rahmen oder Bursts bezeichnet) übertragen werden. Das Verfahren kann in allen solchen Bereichen angewendet werden, in denen Mehrträger-Übertragungsverfahren eingesetzt werden können, also z.B. im Bereich der drahtlosen Datenübertragungsnetze (WLAN) oder im Bereich der digitalen terrestrischen Video- oder Audio-Signalübertragung. Ein bekanntes Mehrträger-Übertragungsverfahren ist beispielsweise das oben bereits beschriebene OFDM-Verfahren. Das Spektrum des Mehrträger-Übertragungsverfahrens enthält Unterträger n und zu diesen symmetrisch bezüglich einer Mittenfrequenz $f_c$ spektral angeordnete Unterträger -n.

Ein wesentlicher Gedanke der vorliegenden Erfindung liegt darin, senderseitig jeden Datenblock mit bestimmten sogenannten Referenzdatensymbolen zu versehen, die dem Empfänger bekannt sind, und aus den empfangenen und verzerrten Referenzdatensymbolen die Verzerrungsparameter zu berechnen. Dabei handelt es sich um zwei zeitlich aufeinander folgende Referenzdatensymbole, für welche die Bedingung gilt, dass während der Referenzdatensymbole bezüglich jedes Unterträgerpaars n/-n das gesendete Datensymbol auf einem Unterträger zeitlich konstant bleibt, während das auf dem jeweils anderen Unterträger das Vorzeichen wechselt. Aus den empfangenen Unterträgersymbolen können anschließend die Verzerrungsparameter berechnet werden.

Es gelten somit die Bedingungen

$$d_n(i) = -d_n(i-1) \quad \text{und}$$
$$d_{-n}(i) = d_{-n}(i-1) \tag{1.1}$$

oder

$$d_n(i) = d_n(i-1) \quad \text{und}$$
$$d_{-n}(i) = -d_{-n}(i-1) \tag{1.2}$$

für alle Unterträgerpaare n/-n, wobei i, i-1 die Zeitpunkte der Referenzdatensymbole sind.

Die Modulationsart der Referenzdatensymbole auf den Unterträgern kann eine andere als die Modulationsart der Nutzdatensymbole sein. Für eine sichere Übertragung der Referenzdaten ist es sinnvoll, für die Referenzdatensymbole auf den Unterträgern eine störungsunempfindliche Modulationsart zu verwenden, wie beispielsweise eine BPSK-Modulation (Binary Phase Shift Keying), bei welcher die Unterträger jeweils zwei verschiedene, um 180˚ gegeneinander verschobene Phasenlagen aufweisen, die im Symbolalphabet mit 1, -1 bezeichnet werden, so dass $d_{n/-n}(i) \in \{-1; 1\}$ ist. Eine Phasenlage bestimmt so den Signalverlauf auf einem Unterträger eines Symbols. Die auf einem Unterträger übertragenen Informationen werden dabei durch die absolute Phasenlage festgelegt (kohärentes Verfahren). Bei einer D-BPSK-Modulation hingegen ist die Information in der Phasendifferenz zwischen den auf demselben Unterträger zweier zeitlich aufeinander folgender Symbole übertragenen Datensymbole enthalten (inkohärentes Verfahren).

Die Art und Weise der Modulation der in dem Datenblock enthaltenen Nutzsignale ist unabhängig von der zuvor beschriebenen Modulation der Datensymbole auf den Unterträgern der Referenzdatensymbole. Für die Modulation der Nutzdaten kann somit auch jede andere gewünschte Modulationsart eingesetzt werden.

Die Referenzdatensymbole sind vorteilhafterweise ein Teil der in den ausgesendeten Datenblöcken ohnehin vorhandenen Präambel, die auch noch andere Datensymbole enthalten kann, die im Empfänger beispielsweise für Synchronisationszwecke verwendet werden können. Eine Präambel besteht stets aus einer Folge von Datensymbolen, die dem Wortsinne nach zeitlich an vorderster Position des Datenblocks angeordnet sind. Im Stand der Technik sind jedoch auch sogenannte Mittambeln bekannt, die in etwa in der Mitte eines Datenblocks ausgesandt werden und im Datenblock zeitlich zwischen Nutzdatensignalen angeordnet sind. Für die vorliegende Erfindung ist der Aufbau der Datenblöcke und die Einordnung der Referenzdatensymbole darin prinzipiell unwesentlich. Die erfindungsgemässen Referenzdatensymbole können somit theoretisch auch als Teil einer Mittambel in den Datenblock eingebaut werden.

Wie bereits oben beschrieben wurde, besteht die für die Erfindung maßgebliche Verzerrung in einer Interferenz zwischen Unterträgern, die sich beidseitig spiegelsymmetrisch der Mittenfrequenz des Mehrträgerspektrums befinden. Diese Verzerrung wird maßgeblich durch sender- und/oder empfängerseitige IQ-Unsymmetrien vorgerufen. Weiterhin kommt es durch die Mehrwegeausbreitung des Funkkanals zu linearen Verzerrungen des betrachteten Unterträgers. Die aus der IQ-Verzerrung und der Kanalverzerrung zusammengesetzte gesamte Verzerrung lässt sich durch folgende Gleichung modellieren:

$$
\begin{bmatrix} \hat{d}'_n(i) \\ \hat{d}'^*_{-n}(i) \end{bmatrix} = \underbrace{\begin{bmatrix} a^{RX}_n & b^{RX}_n \\ b^{RX*}_{-n} & a^{RX*}_{-n} \end{bmatrix}}_{A^{RX}} \cdot \underbrace{\begin{bmatrix} C_n & 0 \\ 0 & C^*_{-n} \end{bmatrix}}_{C} \cdot \underbrace{\begin{bmatrix} a^{TX}_n & b^{TX}_n \\ b^{TX*}_{-n} & a^{TX*}_{-n} \end{bmatrix}}_{A^{TX}} \cdot \begin{bmatrix} d_n(i) \\ d^*_{-n}(i) \end{bmatrix} = \underbrace{\begin{bmatrix} a_n & b_n \\ b^*_{-n} & a^*_{-n} \end{bmatrix}}_{A} \cdot \begin{bmatrix} d_b(i) \\ d^*_{-n}(i) \end{bmatrix} (2)
$$

Dabei sind $\hat{d}'_n(i)$ die zum Zeitpunkt i auf dem Unterträger n empfangenen verzerrten Symbole, $d_n(i)$ die unverzerrten gesendeten Symbole, $A^{TX}$ bildet die senderseitige IQ-Verzerrungsmatrix, $A^{RX}$ die empfangsseitige IQ-Verzerrungsmatix, C enthält die Kanalkoeffizienten eines Mehrwegekanals.

Mit dem erfindungsgemäßen Verfahren werden somit die in der Matrix A enthaltenen Verzerrungsparameter geschätzt. Durch die senderseitige Voranstellung einer Präambel mit den erfindungsgemässen Referenzsymbolen $d_n(i)$ auf den Unterträgern kann unter der Annahme, dass der Kanal für zwei aufeinander folgende OFDM-Symbole annähernd konstant bleibt (für die Elemente der IQ-Verzerrungsmatrizen $A^{TX}$ und $A^{RX}$ ist die Annahme immer gerechtfertigt), die obige Verzerrungsgleichung für die Zeitpunkte i-1 (1. Präambelsymbol) und i (2. Präambelsymbol) aufgestellt werden.

Wenn als Bedingung für die Referenzdatensymbole das obige Gleichungssystem (1.1) angenommen wird, ergeben sich somit die Verzerrungsparameter der Matrix **A** in folgender Weise aus der Addition bzw. Subtraktion der empfangenen Symbole $\hat{d}'_n(i)$:

$$
a_n = 0.5 \cdot \frac{\hat{d}'_n(i) - \hat{d}'_n(i-1)}{d_n(i)}
$$

$$
b_n \approx 0.5 \cdot \frac{\hat{d}'_n(i) + \hat{d}'_n(i-1)}{d^*_{-n}(i)}
$$

$$
b_{-n} = 0.5 \cdot \frac{\hat{d}'_{-n}(i) - \hat{d}'_{-n}(i-1)}{d^*_n(i)}
$$

$$
a_{-n} = 0.5 \cdot \frac{\hat{d}'_{-n}(i) + \hat{d}'_{-n}(i-1)}{d_{-n}(i)} \qquad (3)
$$

Wenn dagegen als Bedingung für die Referenzdatensymbole das obige Gleichungssystem (1.2) angenommen wird, ergeben sich somit die Verzerrungsparameter der Matrix A in folgender Weise aus der Addition bzw. Subtraktion der empfangenen Symbole $\hat{d}'_n(i)$:

$$a_n = 0.5 \cdot \frac{\hat{d}'_n(i) + \hat{d}'_n(i-1)}{d_n(i)}$$

$$b_n = 0.5 \cdot \frac{\hat{d}'_n(i) - \hat{d}'_n(i-1)}{d^*_{-n}(i)}$$

$$b_{-n} = 0.5 \cdot \frac{\hat{d}'_{-n}(i) + \hat{d}'_{-n}(i-1)}{d^*_n(i)}$$

$$a_{-n} = 0.5 \cdot \frac{\hat{d}'_{-n}(i) - \hat{d}'_{-n}(i-1)}{d_{-n}(i)} \tag{4}$$

Die Division durch die gesendeten Präambelsymbole $d_n(i)$, $d_{-n}(i)$ stellt im Falle der Verwendung einer BPSK-Modulation im vorliegenden Fall nur eine Multiplikation mit dem Faktor $\pm 1$ dar.

Liegt nur ein senderseitiger IQ-Fehler vor, können die Einflüsse von Kanal und IQ-Fehler mit der vorgeschlagenen Präambelstruktur getrennt geschätzt werden, womit nach der IQ-Korrektur eine herkömmliche OFDM-Kanalentzerrung möglich wird. Unter diesen Bedingungen und unter Beachtung der Näherung $a_n^{TX}$, $a_{-n}^{TX} \approx 1$ ergeben sich zunächst wiederum bei Annahme des obigen Gleichungssystems (1.1) als Bedingungen für die Referenzdatensymbole die folgenden Gleichungen :

$$\hat{d}'_n(i) - \hat{d}'_n(i-1) = 2 \cdot C_n \cdot d_n(i)$$

$$\hat{d}'_n(i) + \hat{d}'_n(i-1) = 2 \cdot C_n \cdot b_n^{TX} \cdot d^*_{-n}(i)$$

$$\hat{d}'_{-n}(i) - \hat{d}'_{-n}(i-1) = 2 \cdot C_{-n} \cdot b_{-n}^{TX} \cdot d^*_n(i)$$

$$\hat{d}'_{-n}(i) + \hat{d}'_{-n}(i-1) = 2 \cdot C_{-n} \cdot d_{-n}(i) \tag{5.1}$$

Hieraus lassen sich die IQ-Verzerrungsparameter berechnen

$$b_n^{TX} = \frac{\hat{d}'_n(i) + \hat{d}'_n(i-1)}{\hat{d}'_n(i) - \hat{d}'_n(i-1)} \cdot \frac{d_n(i)}{d^*_{-n}(i)}$$

$$b_{-n}^{TX} = \frac{\hat{d}'_{-n}(i) - \hat{d}'_{-n}(i-1)}{\hat{d}'_{-n}(i) + \hat{d}'_{-n}(i-1)} \cdot \frac{d_{-n}(i)}{d^*_n(i)} \tag{5.2}$$

Auch hier ist bei Verwendung einer BPSK-Modulation für die Referenzsymbole $d_n$ und $d_{-n}$ die Multiplikation mit $d_n(i) / d^*_{-n}(i)$ bzw. $d_{-n}(i) / d^*_n(i)$ nur eine Gewichtung mit $\pm 1$.

Wenn dagegen das obige Gleichungssystem (1.2) als Bedingungen für die Referenzdatensymbole angenommen wird, ergeben sich die folgenden Gleichungen :

$$\hat{d}'_n(i) - \hat{d}'_n(i-1) = 2 \cdot C_n \cdot b_n^{TX} \cdot d^*_{-n}(i)$$

$$\hat{d}'_n(i) + \hat{d}'_n(i-1) = 2 \cdot C_n \cdot d_n(i)$$

$$\hat{d}'_{-n}(i) - \hat{d}'_{-n}(i-1) = 2 \cdot C_{-n} \cdot d_n(i)$$

$$\hat{d}'_n(i) + \hat{d}'_n(i-1) = 2 \cdot C_{-n} \cdot b_{-n}^{TX} \cdot d_n(i) \tag{6.1}$$

Hieraus lassen sich die IQ-Verzerrungsparameter berechnen

$$b_n^{TX} = \frac{\hat{d}'_n(i) - \hat{d}'_n(i-1)}{\hat{d}'_n(i) + \hat{d}'_n(i-1)} \cdot \frac{d_n(i)}{d^*_{-n}(i)}$$

$$b_{-n}^{TX} = \frac{\hat{d}'_{-n}(i) + \hat{d}'_{-n}(i-1)}{\hat{d}'_{-n}(i) - \hat{d}'_{-n}(i-1)} \cdot \frac{d_{-n}(i)}{d^*_n(i)} \tag{6.2}$$

Auch hier ist bei Verwendung einer BPSK-Modulation für die Referenzsymbole $d_n$ und $d_{-n}$ die Multiplikation mit $d_n(i)/d^*_{-n}(i)$ bzw. $d_{-n}(i)/d^*_n(i)$ nur eine Gewichtung mit $\pm 1$.

Im Folgenden wird ein Ausführungsbeispiel des erfindungsgemäßen Verfahrens anhand der Zeichnungsfiguren näher erläutert. Es zeigen:

Fig. 1 das Frequenzspektrum des OFDM-Übertragungsverfahrens;

Fig. 2 eine konventionelle PLCP-Präambel nach dem OFDM-Standard IEEE 802.11a;

Fig. 3 eine Ausführungsform der erfindungsgemäßen Verwendung von Referenzdatensymbolen in einer Präambel.

In der Fig. 2 ist ein Abschnitt eines nach dem OFDM-Standard IEEE 802.11a senderseitig übertragenen Datenblocks dargestellt, dessen zeitlicher Beginn am linksseitigen Ende liegt und der sich nach rechts auf der Zeitachse fortsetzt und dessen Darstellung nach dem zweiten Datensymbol am rechtsseitigen Ende abgebrochen ist. Der Datenblock weist eine durch den Standard IEEE 802.11a bekannte sogenannte PLCP-Präambel (Physical Layer Convergence Protocol) auf. Dieser Standard schreibt als Mehrträger-Übertragungsverfahren das OFDM-Übertragungsverfahren vor. Die Nutzdaten beginnen bei dem mit "Data 1" bezeichneten ersten OFDM-Symbol. Jedes der OFDM-Symbole weist eine Länge von 3,2 µs auf und jedem OFDM-Symbol ist ein Schutzintervall (GI, Guard Interval) vorangestellt, welches in etwa der maximal zu erwartenden Dauer der Impulsantwort des Übertragungskanals entspricht (hier 0,8 µs).

Die PLCP-Präambel weist eine Länge von 4 OFDM-Symbolen und somit von insgesamt 16 µs auf und ist in zwei Abschnitte gleicher zeitlicher Länge aufgeteilt. Ein erster, 8 µs langer Abschnitt der PLCP-Präambel ist in 10 kurze Symbole unterteilt, welche für die Signaldetektion, die automatische Pegelanpassung, die Diversitätsselektion, die Frequenz-Grobbestimmung und die Zeitsynchronisation im Empfänger genutzt werden. Der zweite Abschnitt der PLCP-Präambel besteht aus einem GI2-Schutzintervall (doppelte Länge im Vergleich zu GI) und 2 OFDM-Symbolen $T_1$ und $T_2$. Diese Datensymbole dienen bei der konventionellen PLCP-Präambel der Fig.2 einer konventionellen Kanalschätzung im Empfänger. In der konventionellen PLCP-Präambel sind die Symbole $T_1$ und $T_2$ einander gleich.

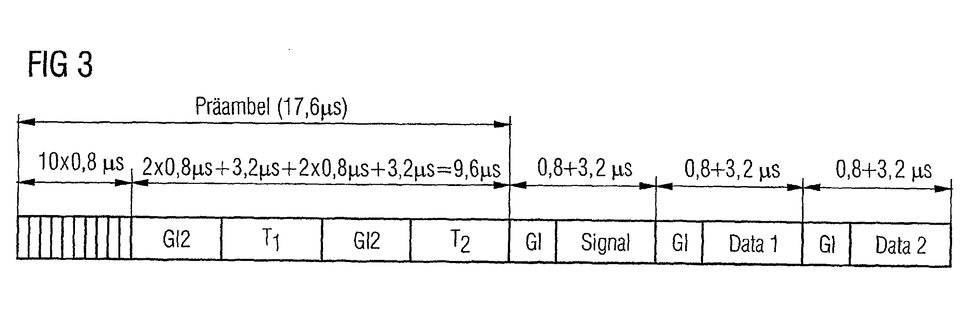

Um das erfindungsgemäße Verfahren ausführen zu können, kann nun die konventionelle PLCP-Präambel so modifiziert werden, dass die bereits erläuterte Bedingung hinsichtlich der Datensymbole auf den Unterträgerpaaren n/-n für die aufeinander folgenden Symbole $T_1$ und $T_2$ erfüllt sind. Eine Ausführungsform der Erfindung ist in der Fig.3 dargestellt.

Das Datensymbol $T_1$ der in der Fig.3 dargestellten Präambel ist demgemäß das im Zeitschritt i erfindungsgemäß verwendete erste Präambelsymbol und das OFDM-Symbol $T_2$ ist das erfindungsgemäß im Zeitschritt i-1 verwendete zweite Präambelsymbol. Man kann dabei eines der beiden OFDM-Symbole $T_1$ und $T_2$ der konventionellen PLCP-Präambel der Fig.2 so belassen, wie es nach dem Standard vorgeschrieben ist, und dann das jeweils andere der OFDM-Symbole $T_1$ und $T_2$ so modifizieren, dass die erfindungsgemäße Bedingung erfüllt ist. Mit den solchermaßen modifizierten, aufeinander folgenden OFDM-Symbolen $T_1$ und $T_2$ können dann wie beschrieben im Empfänger die Verzerrungsparameter der durch den IQ-Fehler hervorgerufenen Verzerrung geschätzt werden. Unabhängig davon können die zwei OFDM-Symbole $T_1$ und $T_2$ im Empfänger wie ursprünglich vorgesehen für eine konventionelle Kanalschätzung herangezogen werden.

Da das zweite OFDM-Symbol der Präambel (T2) nun nicht mehr eine zyklische Fortsetzung des ersten (T1) darstellt, muss vor T2 ein langes Schutzintervall (GI2) eingefügt werden, wie in Fig.3 gezeigt ist.

Im Empfänger können nach dem erfindungsgemäßen Verfahren die Verzerrungsparameter zuerst geschätzt werden und anschließend gezielt für eine Entzerrung verwendet werden. Die Entzerrung kann beispielsweise im digitalen Signalprozessor (DSP) durchgeführt werden. Für jedes Unterträgerpaar kann die Matrix A invertiert und mit dem Vektor der empfangenen Datensymbole multipliziert werden, um den Vektor der ausgesendeten Datensymbole zu erhalten (s. Gl. 1.1)

Die vorliegende Erfindung ist generell auf solche Empfängerkonzepte anwendbar, in welchen noch im analogen Schaltungsteil des Empfängers eine Verzweigung des empfangenen Eingangssignals auf einen I- und Q-Zweig vorgenommen wird. Die wichtigste Anwendung der Erfindung betrifft somit einen sogenannten an sich bekannten direktmischenden Empfänger, wie er beispielsweise in der Abb. 3.5 der eingangs zitierten Dissertation von Schuchert gezeigt ist. Die Erfindung ist aber prinzipiell ebenso auf einen ebenso an sich bekannten Überlagerungsempfänger mit direktmischender zweiter Stufe anwendbar, wie er beispielsweise in der Abb. 3.6 der genannten Dissertation gezeigt und im zugehörigen Text beschrieben ist. Ein derartiger Überlagerungsempfänger mit direktmischender zweiter Stufe ist eine Modifikation eines Heterodyn-Empfängers, bei dem die zweite Mischstufe als direktmischender analoger Quadraturempfänger ausgeführt ist. Auch bei einem solchen Empfänger kann es zu den eingangs beschriebenen IQ-Fehlern kommen, die mit dem erfindungsgemäßen Verfahren geschätzt und entzerrt werden können.

**Patentansprüche**

1. Verfahren zur Schätzung der durch IQ-Unsymmetrien hervorgerufenen Verzerrung von Funksignalen, welche in einem Mehrträger-Übertragungsverfahren mit Unterträgern n und zu diesen im Übertragungsspektrum symmetrisch bezüglich einer Mittenfrequenz $f_c$ angeordneten Unterträgern -n in Datenblöcken übertragen werden, welche jeweils eine Anzahl von Datensymbolen d enthalten, welche aus Unterträgersymbolen $d_{n/-n}$ zusammengesetzt sind, **dadurch gekennzeichnet, dass**

   - jeder Datenblock zwei an Zeitpunkten i, i-1 aufeinander folgende Referenzdatensymbole ($T_1, T_2$) enthält, wobei
   - während der Referenzdatensymbole ($T_1, T_2$) bezüglich jedes Unterträgerpaars n/-n das gesendete Datensymbol auf einem Unterträger zeitlich konstant bleibt, während das auf dem jeweils anderen Unterträger das Vorzeichen wechselt, und
   - aus den empfangenen Unterträgersymbolen die Verzerrungsparameter berechnet werden.

2. Verfahren nach Anspruch 1,
   **dadurch gekennzeichnet, dass** die Verzerrung durch die Gleichung

$$\begin{bmatrix} \hat{d}'_n(i) \\ \hat{d}'^{*}_{-n}(i) \end{bmatrix} = \underbrace{\begin{bmatrix} a^{RX}_n & b^{RX}_n \\ b^{RX*}_{-n} & a^{RX*}_{-n} \end{bmatrix}}_{A^{RX}} \cdot \underbrace{\begin{bmatrix} C_n & 0 \\ 0 & C^{*}_{-n} \end{bmatrix}}_{C} \cdot \underbrace{\begin{bmatrix} a^{TX}_n & b^{TX}_n \\ b^{TX*}_{-n} & a^{TX*}_{-n} \end{bmatrix}}_{A^{TX}} \cdot \begin{bmatrix} d_n(i) \\ d^{*}_{-n}(i) \end{bmatrix} = \underbrace{\begin{bmatrix} a_n & b_n \\ b^{*}_{-n} & a^{*}_{-n} \end{bmatrix}}_{A} \cdot \begin{bmatrix} d_b(i) \\ d^{*}_{-n}(i) \end{bmatrix}$$

   modelliert wird, wobei $\hat{d}'_n(i)$ die zum Zeitpunkt i auf dem Unterträger n empfangenen verzerrten Symbole, $d_n(i)$ die unverzerrten gesendeten Symbole, $\mathbf{A}^{TX}$ die senderseitige IQ-Verzerrungsmatrix, $\mathbf{A}^{RX}$ die empfangsseitige IQ-Verzerrungsmatrix und C die Verzerrungsmatrix des Mehrwegekanals sind.

3. Verfahren nach Anspruch 2,

**dadurch gekennzeichnet, dass**
unter der Annahme $d_n(i) = -d_n(i-1)$ und $d_{-n}(i) = d_{-n}(i-1)$ für alle Unterträgerpaare n/-n und eines für zwei aufeinander folgende Datensymbole annähernd konstanten Kanals die Verzerrungsparameter der Matrix **A** zu

$$a_n = 0.5 \cdot \frac{\hat{d}'_n(i) - \hat{d}'_n(i-1)}{d_n(i)}$$

$$b_n = 0.5 \cdot \frac{\hat{d}'_n(i) + \hat{d}'_n(i-1)}{d^*_{-n}(i)}$$

$$b_{-n} = 0.5 \cdot \frac{\hat{d}'_{-n}(i) - \hat{d}'_{-n}(i-1)}{d^*_n(i)}$$

$$a_{-n} = 0.5 \cdot \frac{\hat{d}'_{-n}(i) + \hat{d}'_{-n}(i-1)}{d_{-n}(i)}$$

berechnet werden.

4. Verfahren nach Anspruch 2,
   **dadurch gekennzeichnet, dass**
   unter der Annahme $d_n(i) = d_n(i-1)$ und $d_{-n}(i) = -d_{-n}(i-1)$ für alle Unterträgerpaare n/-n und eines für zwei aufeinander folgende Datensymbole annähernd konstanten Kanals die Verzerrungsparameter der Matrix A zu

$$a_n = 0.5 \cdot \frac{\hat{d}'_n(i) + \hat{d}'_n(i-1)}{d_n(i)}$$

$$b_n = 0.5 \cdot \frac{\hat{d}'_n(i) - \hat{d}'_n(i-1)}{d^*_{-n}(i)}$$

$$b_{-n} = 0.5 \cdot \frac{\hat{d}'_{-n}(i) + \hat{d}'_{-n}(i-1)}{d^*_n(i)}$$

$$a_{-n} = 0.5 \cdot \frac{\hat{d}'_{-n}(i) - \hat{d}'_{-n}(i-1)}{d_{-n}(i)}$$

berechnet werden.

5. Verfahren nach Anspruch 2,

**dadurch gekennzeichnet, dass**

für den Fall, dass $d_n(i) = -d_n(i-1)$ und $d_{-n}(i) = d_{-n}(i-1)$ für alle Unterträgerpaare n/-n und nur eine senderseitige IQ-Unsymmetrie vorliegt, die Verzerrungsparameter zu

$$b_n^{TX} = \frac{\hat{d}_n'(i) + \hat{d}_n'(i-1)}{\hat{d}_n'(i) - \hat{d}_n'(i-1)} \cdot \frac{d_n(i)}{d_{-n}^*(i)}$$

$$b_{-n}^{TX} = \frac{\hat{d}_{-n}'(i) - \hat{d}_{-n}'(i-1)}{\hat{d}_{-n}'(i) + \hat{d}_{-n}'(i-1)} \cdot \frac{d_{-n}(i)}{d_n^*(i)}$$

berechnet werden.

**6.** Verfahren nach Anspruch 2,
**dadurch gekennzeichnet, dass**
für den Fall, dass $d_n(i) = d_n(i-1)$ und $d_{-n}(i) = -d_{-n}(i-1)$ für alle Unterträgerpaare n/-n und nur eine senderseitige IQ-Unsymmetrie vorliegt, die Verzerrungsparameter zu

$$b_n^{TX} = \frac{\hat{d}_n'(i) - \hat{d}_n'(i-1)}{\hat{d}_n'(i) + \hat{d}_n'(i-1)} \cdot \frac{d_n(i)}{d_{-n}^*(i)}$$

$$b_{-n}^{TX} = \frac{\hat{d}_{-n}'(i) + \hat{d}_{-n}'(i-1)}{\hat{d}_{-n}'(i) - \hat{d}_{-n}'(i-1)} \cdot \frac{d_{-n}(i)}{d_n^*(i)} \tag{6.2}$$

berechnet werden.

**7.** Verfahren nach einem der vorhergehenden Ansprüche,
**dadurch gekennzeichnet, dass**
die Referenzdatensymbole als Teil einer Präambel des Datenblocks ausgesandt werden.

**8.** Verfahren nach einem der vorhergehenden Ansprüche,
**dadurch gekennzeichnet, dass**
das Mehrträger-Übertragungsverfahren ein OFDM-Verfahren ist.

**9.** Verfahren nach einem der vorhergehenden Ansprüche, **dadurch gekennzeichnet, dass**
die Referenzdatensymbole nach einem BPSK- oder D-BPSK-Modulationsverfahren moduliert sind.

**10.** Verfahren zur Entzerrung der durch IQ-Unsymmetrien hervorgerufenen Verzerrung von Mobilfunksignalen, wobei aus den empfangenen Nutzdaten-Datensymbolen und den durch ein Verfahren nach einem der vorhergehenden Ansprüche berechneten Verzerrungsparametern die ausgesendeten Nutzdaten-Datensymbole ermittelt werden.

**11.** Verwendung eines Verfahrens nach einem der vorhergehenden Ansprüche in einem direktmischenden Empfänger.

**12.** Verwendung eines Verfahrens nach einem der Ansprüche 1 bis 10 in einem Überlagerungsempfänger mit direktmischender zweiter Stufe.

**Claims**

**1.** Method for the estimation of the distortion of radio signals that is caused by IQ asymmetries, which radio signals are transmitted in data blocks in a multicarrier transmission method with subcarriers n and subcarriers -n arranged symmetrically with respect to the latter in the transmission spectrum with regard to a centre frequency $f_c$, which data blocks in each case contain a number of data symbols d composed of subcarrier symbols $d_{n/-n}$,
**characterized in that**

- each data block contains two reference data symbols ($T_1$, $T_2$) that succeed one another at instants i, i-1,
- during the reference data symbols ($T_1$, $T_2$) with regard to each subcarrier pair n/-n, the transmitted data symbol on one subcarrier remains temporally constant, while that on the respective other subcarrier changes sign, and
- the distortion parameters are calculated from the received subcarrier symbols.

2. Method according to Claim 1,
   **characterized in that** the distortion is modelled by the equation

$$\begin{bmatrix} \hat{d}'_n(i) \\ \hat{d}'^{*}_{-n}(i) \end{bmatrix} = \underbrace{\begin{bmatrix} a_n^{RX} & b_n^{RX} \\ b_{-n}^{RX*} & a_{-n}^{RX*} \end{bmatrix}}_{A^{RX}} \cdot \underbrace{\begin{bmatrix} C_n & 0 \\ 0 & C^{*}_{-n} \end{bmatrix}}_{C} \cdot \underbrace{\begin{bmatrix} a_n^{TX} & b_n^{TX} \\ b_{-n}^{TX*} & a_{-n}^{TX*} \end{bmatrix}}_{A^{TX}} \cdot \begin{bmatrix} d_n(i) \\ d^{*}_{-n}(i) \end{bmatrix} = \underbrace{\begin{bmatrix} a_n & b_n \\ b^{*}_{-n} & a^{*}_{-n} \end{bmatrix}}_{A} \cdot \begin{bmatrix} d_b(i) \\ d'^{*}_{-n}(i) \end{bmatrix}$$

where $\hat{d}'_n(i)$ are the distorted symbols received at the instant i on the subcarrier n, $d_n(i)$ are the undistorted transmitted symbols, $A^{TX}$ is the transmitter-end IQ distortion matrix, $A^{RX}$ is the reception-end IQ distortion matrix, and C is the distortion matrix of the multipath channel.

3. Method according to Claim 2,
   **characterized in that** assuming $d_n(i) = -d_n(i-1)$ and
   $d_{-n}(i-1) = d_{-n}(i-1)$ for all subcarrier pairs n/-n and a channel that is approximately constant for two data symbols that succeed one another, the distortion parameters of the matrix A are calculated as

$$a_{n'} = 0.5 \cdot \frac{\hat{d}'_n(i) - \hat{d}'_n(i-1)}{d_n(i)}$$

$$b_n = 0.5 \cdot \frac{\hat{d}'_n(i) + \hat{d}'_n(i-1)}{d^{*}_{-n}(i)}$$

$$b_{-n} = 0.5 \cdot \frac{\hat{d}'_{-n}(i) - \hat{d}'_{-n}(i-1)}{d^{*}_n(i)}$$

$$a_{-n} = 0.5 \cdot \frac{\hat{d}'_{-n}(i) + \hat{d}'_{-n}(i-1)}{d_{-n}(i)}$$

4. Method according to Claim 2,
   **characterized in that** assuming $d_n(i) = d_n(i-1)$ and $d_{-n}(i) = -d_{-n}(i-1)$ for all subcarrier pairs n/-n and a channel that is approximately constant for two data symbols that succeed one another, the distortion parameters of the matrix A are calculated as

$$a_n = 0.5 \cdot \frac{\hat{d}'_n(i) + \hat{d}'_n(i-1)}{d_n(i)}$$

$$b_n = 0.5 \cdot \frac{\hat{d}'_n(i) - \hat{d}'_n(i-1)}{d^*_{-n}(i)}$$

$$b_{-n} = 0.5 \cdot \frac{\hat{d}'_{-n}(i) + \hat{d}'_{-n}(i-1)}{d^*_n(i)}$$

$$a_{-n} = 0.5 \cdot \frac{\hat{d}'_{-n}(i) - \hat{d}'_{-n}(i-1)}{d_{-n}(i)}$$

5. Method according to Claim 2,
   **characterized in that** for the case where $d_n(i) = -d_n(i-1)$ and $d_{-n}(i) = d_{-n}(i-1)$ for all subcarrier pairs n/-n and only a transmitter-end IQ asymmetry is present, the distortion parameters are calculated as

$$b_n^{TX} = \frac{\hat{d}'_n(i) + \hat{d}'_n(i-1)}{\hat{d}'_n(i) - \hat{d}'_n(i-1)} \cdot \frac{d_n(i)}{d^*_{-n}(i)}$$

$$b_{-n}^{TX} = \frac{\hat{d}'_{-n}(i) - \hat{d}'_{-n}(i-1)}{\hat{d}'_{-n}(i) + \hat{d}'_{-n}(i-1)} \cdot \frac{d_{-n}(i)}{d^*_n(i)}$$

6. Method according to Claim 2,
   **characterized in that** for the case where $d_n(i) = d_n(i-1)$ and $d_{-n}(i) = -d_{-n}(i-1)$ for all subcarrier pairs n/-n and only a transmitter-end IQ asymmetry is present, the distortion parameters are calculated as

$$b_n^{TX} = \frac{\hat{d}'_n(i) - \hat{d}'_n(i-1)}{\hat{d}'_n(i) + \hat{d}'_n(i-1)} \cdot \frac{d_n(i)}{d^*_{-n}(i)}$$

$$b_{-n}^{TX} = \frac{\hat{d}'_{-n}(i) + \hat{d}'_{-n}(i-1)}{\hat{d}'_{-n}(i) - \hat{d}'_{-n}(i-1)} \cdot \frac{d_{-n}(i)}{d^*_n(i)}$$

$$(6.2).$$

7. Method according to one of the preceding claims,
   **characterized in that** the reference data symbols are transmitted as part of a preamble of the data block.

8. Method according to one of the preceding claims,
   **characterized in that** the multicarrier transmission method is an OFDM method.

9. Method according to one of the preceding claims,
   **characterized in that** the reference data symbols are modulated according to a BPSK or D-BPSK modulation method.

**10.** Method for the equalization of the distortion of mobile radio signals that is caused by IQ asymmetries, the transmitted payload-data data symbols being determined from the received payload-data data symbols and the distortion parameters calculated by a method according to one of the preceding claims.

**11.** Use of a method according to one of the preceding claims in a direct-mixing receiver.

**12.** Use of a method according to one of Claims 1 to 10 in a heterodyne receiver with a direct-mixing second stage.

**Revendications**

**1.** Procédé d'estimation de la distorsion, provoquée par des asymétries IQ, de signaux hertziens qui sont transmis par blocs de données dans un procédé de transmission à porteuses multiples comportant des sous-porteuses n et des sous-porteuses -n, disposées symétriquement aux sous-porteuses n par rapport à une fréquence médiane $f_c$, les blocs de données contenant chacun un certain nombre de symboles de données qui sont constitués de symboles de sous-porteuses $d_{n/-n}$,
**caractérisé en ce que**

- chaque bloc de données contient deux symboles de données de référence ($T_1$, $T_2$) successifs à des instants i, i-1,
- le symbole de données émis sur une sous-porteuse restant temporellement constant pendant les symboles de données de référence ($T_1$, $T_2$) relativement à chaque paire de sous-porteuses n/-n tandis que l'autre sous-porteuse change de signe, et
- les paramètres de distorsion étant ensuite calculés à partir des symboles de sous-porteuses reçus.

**2.** Procédé selon la revendication 1, **caractérisé en ce que** la distorsion est modélisée par l'équation :

$$\begin{bmatrix} \hat{d}'_n(i) \\ \hat{d}'^*_{-n}(i) \end{bmatrix} = \underbrace{\begin{bmatrix} a_n^{RX} & b_n^{RX} \\ b_{-n}^{RX^\bullet} & a_{-n}^{RX^\bullet} \end{bmatrix}}_{A^{RX}} \cdot \underbrace{\begin{bmatrix} C_n & 0 \\ 0 & C_{-n}^\bullet \end{bmatrix}}_{C} \cdot \underbrace{\begin{bmatrix} a_n^{TX} & b_n^{TX} \\ b_{-n}^{TX^\bullet} & a_{-n}^{TX^\bullet} \end{bmatrix}}_{A^{TX}} \cdot \begin{bmatrix} d_n(i) \\ d^*_{-n}(i) \end{bmatrix} = \underbrace{\begin{bmatrix} a_n & b_n \\ b^*_{-n} & a^*_{-n} \end{bmatrix}}_{A} \cdot \begin{bmatrix} d_n(i) \\ d^*_{-n}(i) \end{bmatrix}$$

où $\hat{d}'_n(i)$ représente le symbole distordu reçu à l'instant i sur la sous-porteuse n, $d_n(i)$ représente le symbole émis non distordu, $A^{TX}$ forme la matrice de distorsion IQ du côté émetteur, $A^{RX}$ forme la matrice de distorsion IQ du côté récepteur, C contient les coefficients de canal à voies multiples.

**3.** Procédé selon la revendication 2, **caractérisé en ce que**, en adoptant $d_n(i) = -d_n(i-1)$ et $d_{-n}(i) = d_{-n}(i-1)$ pour toutes les paires de sous-porteuses n/-n et un canal à peu près constant pour deux symboles de données successifs, on calcule les paramètres de distorsion de la matrice A

$$a_n = 0{,}5 \cdot \frac{\hat{d}'_n(i) - \hat{d}'_n(i-1)}{d_n(i)}$$

$$b_n = 0{,}5 \cdot \frac{\hat{d}'_n(i) + \hat{d}'_{-n}(i-1)}{d^*_{-n}(i)}$$

$$b_{-n} = 0{,}5 \cdot \frac{\hat{d}'_{-n}(i) - \hat{d}'_{-n}(i-1)}{d^*_n(i)}$$

$$a_{-n} = 0{,}5 \cdot \frac{\hat{d}'_{-n}(i) + \hat{d}'_{-n}(i-1)}{d_{-n}(i)}$$

4. Procédé selon la revendication 2, **caractérisé en ce que**, en adoptant $d_n(i) = d_n(i-1)$ et $d_{-n}(i) = d_{-n}(i-1)$ pour toutes les paires de sous-porteuses n/-n et un canal à peu près constant pour deux symboles de données successifs, on calcule les paramètres de distorsion de la matrice A

$$a_n = 0{,}5 \cdot \frac{\hat{d}'_n(i) + \hat{d}'_n(i-1)}{d_n(i)}$$

$$b_n = 0{,}5 \cdot \frac{\hat{d}'_n(i) - \hat{d}'_n(i-1)}{d^*_{-n}(i)}$$

$$b_{-n} = 0{,}5 \cdot \frac{\hat{d}'_{-n}(i) + \hat{d}'_{-n}(i-1)}{d^*_n(i)}$$

$$a_{-n} = 0{,}5 \cdot \frac{\hat{d}'_{-n}(i) - \hat{d}'_{-n}(i-1)}{d_{-n}(i)}$$

5. Procédé selon la revendication 2, **caractérisé en ce que**, dans le cas où l'on a $d_n(i) = -d_n(i-1)$ et $d_{-n}(i) = d_{-n}(i-1)$ pour toutes les paires de sous-porteuses n/-n et une seule asymétrie IQ du côté émetteur, on calcule les paramètres de distorsion de la matrice A

$$b_n^{TX} = \frac{\hat{d}'_n(i) + \hat{d}'_n(i-1)}{\hat{d}'_n(i) - \hat{d}'_n(i-1)} \cdot \frac{d_n(i)}{d^*_{-n}(i)}$$

$$b_{-n}^{TX} = \frac{\hat{d}'_{-n}(i) - \hat{d}'_{-n}(i-1)}{\hat{d}'_{-n}(i) + \hat{d}'_{-n}(i-1)} \cdot \frac{d_{-n}(i)}{d^*_n(i)}$$

6. Procédé selon la revendication 2, **caractérisé en ce que**, dans le cas où l'on a $d_n(i) = d_n(i-1)$ et $d_{-n}(i) = -d_{-n}(i-1)$ pour toutes les paires de sous-porteuses n/-n et une seule asymétrie IQ du côté émetteur, on calcule les paramètres de distorsion de la matrice A

$$b_n^{TX} = \frac{\hat{d}'_n(i) - \hat{d}'_n(i-1)}{\hat{d}'_n(i) + \hat{d}'_n(i-1)} \cdot \frac{d_n(i)}{d^*_{-n}(i)}$$

$$b_{-n}^{TX} = \frac{\hat{d}'_{-n}(i) + \hat{d}'_{-n}(i-1)}{\hat{d}'_{-n}(i) - \hat{d}'_{-n}(i-1)} \cdot \frac{d_{-n}(i)}{d^*_n(i)}$$

**7.** Procédé selon l'une des revendications précédentes, **caractérisé en ce que** les symboles de données de référence sont émis comme partie d'un préambule du bloc de données.

**8.** Procédé selon l'une des revendications précédentes, **caractérisé en ce que** le procédé de transmission à porteuses multiples est un procédé OFDM.

**9.** Procédé selon l'une des revendications précédentes, **caractérisé en ce que** les symboles de données de référence sont modulés selon un procédé de modulation BPSK ou D-BPSK.

**10.** Procédé de correction de la distorsion de signaux de téléphonie mobile provoquée par des asymétries IQ, dans lequel les symboles de données utiles émis sont déterminés à partir des symboles de données utiles reçus et des paramètres de distorsion calculés selon l'une des revendications précédentes.

**11.** Utilisation d'un procédé selon l'une des revendications précédentes dans un récepteur à mélange direct.

**12.** Utilisation d'un procédé selon l'une des revendications 1 à 10 dans un récepteur hétérodyne comportant un deuxième étage de mélange direct.

FIG 1

K Trägerfrequenzen

$f_c - f_{-K/2}$    $f_c - f_{-1}$    $f_c$    $f_c + f_1$    $f_c + f_{K/2}$

0    f

FIG 2

Präambel

8+8=16 µs

10x0,8=8 µs    2x0,8+2x3,2=8,0 µs    0,8+3,2=4,0 µs    0,8+3,2=4,0 µs    0,8+3,2=4,0 µs

GI2    $T_1$    $T_2$    GI    Signal    GI    Data 1    GI    Data 2

$t_1$ $t_2$ $t_3$ $t_4$ $t_5$ $t_6$ $t_7$ $t_8$ $t_9$ $t_{10}$

EP 1 537 711 B1

## FIG 3

Präambel (17,6µs)

10x0,8 µs | 2x0,8µs+3,2µs+2x0,8µs+3,2µs=9,6µs | 0,8+3,2 µs | 0,8+3,2 µs | 0,8+3,2 µs

| GI2 | T₁ | GI2 | T₂ | GI | Signal | GI | Data 1 | GI | Data 2 |